# EUROPEAN PATENT SPECIFICATION

(11) **EP 1 610 305 B1**
(45) Date of publication and mention of the grant of the patent: **29.10.2008**
(21) Application number: 05253930.1
(22) Date of filing: 24.06.2005
(51) Int. Cl.: G06F 3/06, G11B 7/0045, G11B 7/28

(54) **Optical recording and/or reproducing apparatus for automatically making a copy of an optical disc and method thereof**
Optisches Aufzeichnungs- und/oder Wiedergabegerät zum automatischen Kopieren einer optischen Platte und Verfahren dafür
Appareil optique d'enregistrement et/ou de lecture pour faire la copie de disc optique automatiquement et procédé associé

(30) Priority: 24.06.2004 KR 2004047529
(43) Date of publication of application: 28.12.2005
(73) Proprietor: Samsung Electronics Co., Ltd., Suwon-Si, Gyeonggi-Do (KR)
(72) Inventor: Han, In-ho, Yeongtong-gu Suwon-Si Gyeonggi-do Korea (KR)
(74) Representative: Davies, Robert Ean

(56) References cited:
- US-A1- 2003 051 112
- US-A1- 2004 042 104
- US-A1- 2004 081 427
- PATENT ABSTRACTS OF JAPAN vol. 012, no. 175 (P-707), 25 May 1988 (1988-05-25) -& JP 62 285290 A (MATSUSHITA ELECTRIC IND CO LTD), 11 December 1987 (1987-12-11)

## Description

The present invention relates to an optical recording and/or reproducing apparatus to automatically copy original data recorded on an optical disc onto one or more target optical discs using a recording medium such as a hard disc drive (HDD) of the optical recording and/or reproducing apparatus, and a method of automatically copying the original data onto the one or more target optical discs.

Optical recording and/or reproducing apparatuses record a broadcasting signal on, or reproduce a broadcasting signal from, a recording medium. With the development of digitalizing and compressing technology for a broadcasting signal, the function of such an optical recording and/or reproducing apparatus has been expanded.

The optical recording and/or reproducing apparatus supports the use of various video sources, such as a satellite broadcasting signal, cable broadcasting, network broadcasting via the internet, or the like. Also, with the development of digitalizing and compressing technology for data, the optical recoding and/or reproducing apparatus records data on and/or reproduces data from an optical medium such as a CD-ROM or a digital versatile disc (DVD). Although such an optical medium is used for a long time, the image quality produced from the optical medium typically does not deteriorate. Also, the optical medium can store high quality images and multi-channel (for example, 5.1-channel) audio data. Thus, the optical medium can replace conventional analog image recording media.

An optical medium such as a DVD storing video and audio data can store quantities of data ranging from hundreds of Mbytes to several Gbytes. Recent optical recording and/or reproducing apparatuses have adopted a large capacity HDD to easily store or read large amounts of data.

A DVD/HDD optical recording and/or reproducing apparatus is a representative example of a combination of a DVD drive and an HDD which both record data and/or reproduce data. In general, the DVD drive reproduces data from an optical disc such as a DVD, an audio CD, a video CD, an MP3 CD, or the like.

Conventionally, a user must provide an original optical disc, such as a DVD, in an optical disc drive to record data of the original optical disc onto a recording medium such as an HDD, and then manually record the data on one or more optical discs again so as to copy the data recorded on the original optical disc.

Thus, when the user copies the data recorded on the original optical disc to one or more optical discs, the user must perform several copying operations, which requires a large amount of time.

US 2003/0051112 (cf. the preamble of claims 1 and 10) discloses a system for copying compact discs using read/write compact disc drives that have one or more copy buttons on their face and attached to a computer system. In a one copy button read/write compact disc drive, pressing the copy button launches copy software that evaluates the computer system to determine the number of CD drives available, and evaluates any CDs inserted into any of the CD drives to determine their type and formatting. Based upon this information, the copy software then sends prompts to the user, guiding and directing the user to take the appropriate steps to complete the copy process. In a multiple copy button read/write compact disc drive, each of the copy buttons has a different function. One copy button could be used for copying music CDs. Another copy button could be used for copying data CDs. The copy software is launched by either copy button.

US 2004/0081427 discloses an optical recording medium copying apparatus and method provides applying power to two compact disc rewritable (CDRW) drives and copying data recorded on a first optical recording medium in one of the CDRW drives to a second optical recording medium in the other CDRW drive, without a PC system or a recording application program. A transmitting optical recording medium drive transmits data recorded on the first optical recording medium when both a predetermined power and a copying signal are applied to the transmitting drive. A receiving optical recording medium drive receives the data from the transmitting drive when both a predetermined power and a copying signal are applied to the receiving drive, and records the received data on the first optical recording medium. Communication lines between the transmitting and receiving drives are used to transmit data recorded on the first optical recording medium to the second optical recording medium.

JP 62285290 discloses a process of copying an optical disc. In the process an optical disc being a copy master is loaded on an optical disc drive and a hard disc is loaded on a hard disc drive. Then using a logic index/management table data is copied on an optical disc being a copy destination via the hard disc.

Accordingly, the present general inventive concept solves the above-mentioned and/or other problems, and an aim of embodiments of the present invention is to provide an optical recording and/or reproducing apparatus to automatically copy data recorded on an original optical disc to one or more target optical discs using a recording medium such as an HDD of the optical recording and/or reproducing apparatus, and a method of automatically copying the original data onto the one or more target optical discs.

Additional aims and/or advantages of the invention will be set forth in part in the description which follows and, in part, will be apparent from the description, or may be learned by practice of the invention.

According to another aspect, the present invention provides an optical recording and/or reproducing method comprising: reading data from an original optical disc; recording the data on another recording medium; and reading the data on the other recording medium to record the data onto one target optical discs; characterized requesting a user to provide one or more of the target optical discs to which the data is to be recorded before performing the step of reading data from the original optical disc; wherein the step of reading of the data from the original optical disc through to the step of recording of the data onto the one or more target optical discs is automatically performed in response to an optical disc copy mode being chosen.

According to another aspect, the present invention provides an optical recording and/or reproducing apparatus comprising: a key input unit; an optical disc drive operable to read data from an original optical disc and record the data on one or more target optical discs; a recording medium on which the data read from the original optical disc may be recorded; characterized by a controller operable to control the optical disc drive to automatically record the data from the recording medium onto one of the one or more target optical discs in response to an optical disc copy mode being chosen; and wherein a user may input a predetermined number of the one or more target optical discs onto which the data is to be recorded through the key input unit.

For a better understanding of the invention, and to show how embodiments of the same may be carried into effect, reference will now be made, by way of example, to the accompanying diagrammatic drawings in which:
FIG. 1 is a block diagram of an optical recording and/or reproducing apparatus to automatically make a copy of an optical disc according to an embodiment of the present invention; and
FIG. 2 is a flowchart of an optical recording and/or reproducing method of automatically making a copy of an optical disc according to an embodiment of the present invention.

Reference will now be made in detail to embodiments of the present invention, examples of which are illustrated in the accompanying drawings, wherein like reference numerals refer to the like elements throughout. The embodiments are described below to explain the present invention by referring to the figures. Also, well-known functions or constructions may not be described in detail in order to not obscure the invention in unnecessary detail.

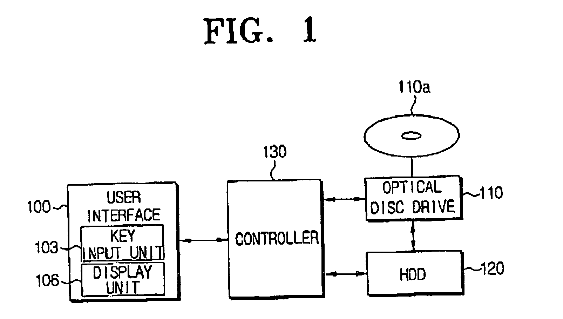

FIG. 1 is a block diagram of an optical recording and/or reproducing apparatus to automatically make a copy of an optical disc according to an embodiment of the present invention. Referring to FIG. 1, the optical recording and/or reproducing apparatus includes a user interface 100, an optical disc drive 110, an HDD 120, and a controller 130.

The optical recording and/or reproducing apparatus reproduces data from an optical disc 110a and records the data provided from the optical disc 110a to a target optical disc and/or the HDD 120. The reproduced data may be provided to a display device before, during, or after the recording of the data onto the target optical disc and/or the HDD 120. For convenience, the optical recording and/or reproducing apparatus will be described based on blocks related to embodiments of the present invention.

The user interface 100 includes a key input unit 103 and a display unit 106.

A user inputs a manipulation command, a command to set an optical disc copy mode, and a command corresponding to a number of optical discs to which the user desires to copy data to the key input unit 103. Here, the optical disc copy mode indicates a mode in which the optical recording and/or reproducing apparatus automatically copies data on the one or more target optical discs according to the number desired by the user in response to the user providing an original optical disc 110a in the optical disc drive 110 of the optical recording and/or reproducing apparatus.

The display unit 106 displays a request message to provide the original optical disc, for example, "Insert an original optical disc", a request message to provide a target optical disc, for example, "Insert a target optical disc", and a message to inquire as to what number of optical discs to which the user desires to copy data, for example, "Input a number of optical discs to which you desire to copy data."

The optical disc drive 110 records stream form data, such as that generated by a Moving Picture Experts Group (MPEG) encoder (not shown), and/or data read from the HDD 120 on the optical disc 110a, or reads data from the optical disc 110a. Here, the optical disc 110a may be, for example, a DVD or a CD.

The stream form data generated by the MPEG encoder and the data read from the optical disc 110a is recorded on the HDD 120.

When the optical disc copy mode is set via the key input unit 103, the controller 130 controls the display unit 106 to display the message inquiring as to the number of optical discs to which the user desires to copy the data.

When the number of optical discs to which the user desires to copy the data is input via the key input unit 103, the controller 130 controls the display unit 106 to display the request message to provide the original optical disc.

The controller 130 controls the optical disc drive 110 to determine that the original optical disc is provided therein, read data from the original optical disc, and record the read data on the HDD 120.

After the controller 130 records the read data on the HDD 120, the controller 130 controls the display unit 106 to display the request message to provide the target optical disc.

The controller 130 controls the optical disc drive 110 and the HDD 120 to determine that the target optical disc is provided in the optical disc drive 110, read the data from the HDD 120, and record the read data on the target optical disc.

The controller 130 determines whether the data recorded on the original optical disc 110a is recorded on a number of the target optical discs that is equal to the number of optical discs to which the user desires to copy the data, which is the number of optical discs input by the user via the key input unit 103, and controls the optical disc drive 110 to repeatedly record the data on the other target optical discs until the data is recorded on the desired number of the target optical discs.

When the data is completely recorded on the desired number of the target optical discs, the controller 130 may delete the data recorded on the HDD 120.

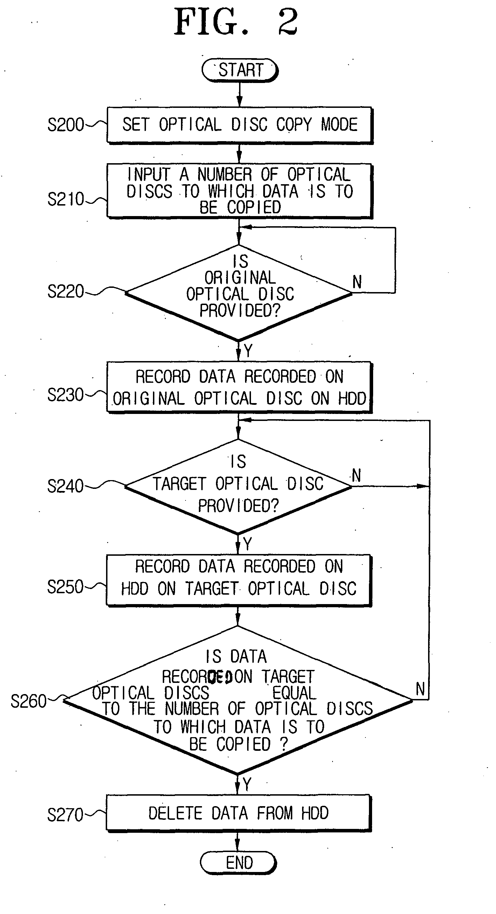

FIG. 2 is a flowchart of an optical recording and/or reproducing method of automatically making a copy of an optical disc according to an embodiment of the present invention. Referring to FIGS. 1 and 2, in operation S200, the user sets the optical disc copy mode using the key input unit 103.

Here, the optical disc copy mode indicates a mode in which, when the user provides an original optical disc in the optical disc drive 110 of the optical recording and/or reproducing apparatus, the optical recording and/or reproducing apparatus automatically copies data on the number of target optical discs desired by the user.

In operation S210, the display unit 106 displays the message inquiring as to the number of optical discs to which the user desires to copy the data, and the user inputs the number of optical discs to which the user desires to copy the data via the key input unit 103.

In operation S220, the display unit 106 displays the message requesting the user to provide the original optical disc 110a, and the controller 103 determines whether the original optical disc 110a is provided in the optical disc drive 110.

If the controller 130 determines in operation in S220 that the original optical disc 110a is mounted in the optical disc drive 110. in operation S230, the optical disc drive 110 reads data from the original optical disc 110a and records the read data on the HDD 120.

In operation S240, the display unit 106 displays the request message to provide the target optical disc, and the controller 130 determines whether the target optical disc is provided in the optical disc drive 110.

If the controller 130 senses in operation S240 that the target optical disc is provided in the optical disc drive 110, in operation S250, the controller 130 reads the data from the HDD 120, and the optical disc drive 110 records the read data on the target optical disc.

In operation S260, the controller 130 determines whether the read data is recorded on the number of the target optical discs that is equal to the number of optical discs to which the user desires to copy the data, which is the number of optical discs input by the user via the key input unit 103.

If the controller 130 determines in operation S260 that the read data is recorded on the number of target optical discs that is equal to the number of optical discs to which the user desires to copy the data, in operation S270, the controller 130 deletes the data recorded on the HDD 120.

If the controller 130 determines in operation S260 that the read data is not recorded on the number of target optical discs that is equal to the number of optical discs to which the user desires to copy the data, the display unit 106 displays the request message to provide another target optical disc, and the controller 130 returns to operation S240 to determine whether the target optical disc is provided in the optical disc drive 110 so as to repeat operation S250 until the read data is recorded on the number of target optical discs that is equal to the number of optical discs desired by the user.

As described above, in an optical recording and/or reproducing apparatus to automatically make a copy of an optical disc, and in a method of automatically making a copy of the optical disc, according to an embodiment of the present invention, data of an original optical disc can be recorded on an HDD, and the data recorded on the HDD can be recorded on one or more target optical discs. Thus, a user does not need to record the data of the original optical disc on the HDD and then manually record the data on the HDD on one or more target optical discs. As a result, the user can save efforts and time.

Although a few embodiments of the present invention have been shown and described, it would be appreciated by those skilled in the art that changes may be made in these embodiments within the scope of the claims .

## Claims

1. An optical recording and/or reproducing method comprising:
reading data from an original optical disc;
recording the data on another recording medium (120); and
reading the data on the other recording medium (120) to record the data onto one target optical disc; **characterized by**
requesting a user to provide one or more of the target optical discs to which the data is to be recorded before performing the step of reading data from the original optical disc; wherein
the step of reading of the data from the original optical disc through to the step of recording of the data onto the one or more target optical discs is automatically performed in response to an optical disc copy mode being chosen.

2. The optical recording and/or reproducing method of claim 1, further comprising:
setting an optical disc copy mode in which data recorded on an original optical disc is automatically recorded on one or more target optical discs,
in response to a request to provide the original optical disc being made and a determination that the original disc has been provided; automatically reading the data from the original optical disc, and recording the read data on another recording medium (120),
reading the data from the other recording medium (120), and recording the read data onto the one or more target optical discs, in response to a determination that one of the target optical discs has been provided.

3. The optical recording and/or reproducing method of claim 1 or claim 2, further comprising deleting the data from the other recording medium (120) in response to the data read from the recording medium (120) being recorded on the one or more target optical discs.

4. The optical recording and/or reproducing method of any preceding claim, further comprising requesting a user to provide one of the one or more target optical discs in response to the data being recorded on the other recording medium.

5. The optical recording and/or reproducing method of any preceding claim, wherein the data read from the other recording medium (120) is recorded on a predetermined number of the target optical discs in response to a request to input the predetermined number of the target optical discs to which the data is to be copied being made, and the predetermined number being input.

6. The optical recording and/or reproducing method of any preceding claim, wherein the requests to provide the original optical disc and the one or more target optical discs are made by displaying corresponding messages.

7. The optical recording and/or reproducing method of any preceding claim, wherein the other recording medium (120) is a hard disc drive.

8. The optical recording and/or reproducing method of any preceding claim, wherein the request to input the predetermined number of the target optical discs to which the data is to be copied is made by displaying a corresponding message.

9. The optical recording and/or reproducing method of any preceding claim, wherein the original optical disc and/or the one or more target optical discs are digital versatile discs or compact discs.

10. An optical recording and/or reproducing apparatus comprising:
a key input unit (103);
an optical disc drive (110) operable to read data from an original optical disc and record the data on one or more target optical discs;
a recording medium (120) on which the data read from the original optical disc may be recorded; **characterized by**
a controller (130) operable to control the optical disc drive to automatically record the data from the recording medium onto one of the one or more target optical discs in response to an optical disc copy mode being chosen; and wherein
a user may input a predetermined number of the one or more target optical discs onto with the data is to be recorded through the key input unit (103) before performing the step of reading data from the original optical disc.

11. The optical recording and/or reproducing apparatus of claim 10, wherein the key input unit (103) operable to input the optical disc copy mode.

12. The optical recording and/or reproducing apparatus of claim 10 or 11, wherein:
the key input unit (103) is operable to input a command to set an optical disc copy mode in which data recorded on an original optical disc is automatically recorded on one or more target optical discs;
an optical disc drive (110) operable to read the data from the original optical disc and to record the read data on the one or more target optical discs;
a recording medium (120) on which the data read from the original optical disc may be recorded; and
a controller (130) operable to control the optical disc drive (110) and the recording medium (120) to determine that the original optical disc is provided, to read the data from the original optical disc to record the read data on the recording medium (120), to determine that one of the target optical discs is provided, and to read the data from the recording medium (120) to record the read data on the one of the target optical discs.

13. The optical recording and/or reproducing apparatus of any one of claims 10 - 12, wherein the controller (130) deletes the data from the recording medium (120) in response to the data read from the recording medium being recorded on the target optical disc.

14. The optical recording and/or reproducing apparatus of any one of claims 10 -13, wherein the controller (130) is operable to determine whether the data is recorded on a predetermined number of the target optical discs in response to the data read from the recording medium (120) being recorded on the one of the target optical discs, and to continue to record the data on a remainder of the target optical discs in response to the data not being recorded on the predetermined number of the target optical discs, the predetermined number being input via the key input unit (103).

15. The optical recording and/or reproducing apparatus of any one of claims 10 -14, further comprising a display unit (106) operable to request a user to provide the original optical disc and/or one of the target optical discs.

16. The optical recording and/or reproducing apparatus of any one of claims 10 - 15, wherein the controller is operable to control the display unit (106) to display a request to provide the original optical disc in response to the optical disc copy mode being set, and to display a request to provide the one of the target optical discs in response to the read data being recorded on the recording medium (120).

17. The optical recording and/or reproducing apparatus of any one of claims 10 - 16, wherein the recording medium (120) is a hard disc drive.

18. The optical recording and/or reproducing apparatus of any one of claims 10 - 17:
wherein the controller (130) is operable to control the display unit (106) to display a request to provide the predetermined number of the target optical discs to which the data is to be copied.

19. The optical recording and/or reproducing apparatus of any one of claims 10 - 18, wherein the original optical disc and/or the one or more target optical discs are digital versatile discs or compact discs.

## Patentansprüche

1. Verfahren zur optischen Aufzeichnung und/oder Wiedergabe, mit den folgenden Schritten:
Lesen von Daten aus einer originalen optischen Platte;
Aufzeichnen der Daten auf einem anderen Aufzeichnungsmedium (120) und
Lesen der Daten auf dem anderen Aufzeichnungsmedium (120), um die Daten auf einer optischen Zielplatte aufzuzeichnen; **dadurch gekennzeichnet, daß**
ein Benutzer aufgefordert wird, eine oder mehrere der optischen Zielplatten bereitzustellen, auf die die Daten aufgezeichnet werden sollen, bevor der Schritt des Lesens von Daten aus der originalen optischen Platte durchgeführt wird; wobei
der Schritt des Lesens der Daten aus der originalen optischen Platte bis zu dem Schritt des Aufzeichnens der Daten auf der einen oder den mehreren optischen Zielplatten automatisch als Reaktion auf die Auswahl eines Kopiermodus optischer Platten durchgeführt wird.

2. Verfahren zur optischen Aufzeichnung und/oder Wiedergabe nach Anspruch 1, ferner mit den folgenden Schritten:
Einstellen eines Kopiermodus optischer Platten, bei dem auf einer originalen optischen Platte aufgezeichnete Daten automatisch auf einer oder mehreren optischen Zielplatten aufgezeichnet werden;
als Reaktion auf eine Aufforderung, die originale optische Platte bereitzustellen, und eine Bestimmung, daß die Originalplatte bereitgestellt wurde, automatisches Lesen der Daten aus der originalen optischen Platte und Aufzeichnen der gelesenen Daten auf einem anderen Aufzeichnungsmedium (120);
Lesen der Daten aus dem anderen Aufzeichnungsmedium (120) und Aufzeichnen der gelesenen Daten auf der einen oder den mehreren optischen Zielplatten als Reaktion auf eine Bestimmung, daß eine der optischen Zielplatten bereitgestellt wurde.

3. Verfahren zur optischen Aufzeichnung und/oder Wiedergabe nach Anspruch 1 oder 2, ferner mit dem Schritt des Löschens der Daten von dem anderen Aufzeichnungsmedium (120) als Reaktion darauf, daß die aus dem Aufzeichnungsmedium (120) gelesenen Daten auf der einen oder den mehreren optischen Zielplatten aufgezeichnet werden.

4. Verfahren zur optischen Aufzeichnung und/oder Wiedergabe nach einem der vorhergehenden Ansprüche, bei dem ferner als Reaktion auf die Aufzeichnung der Daten auf dem anderen Aufzeichnungsmedium ein Benutzer aufgefordert wird, eine der einen oder mehreren optischen Zielplatten bereitzustellen.

5. Verfahren zur optischen Aufzeichnung und/oder Wiedergabe nach einem der vorhergehenden Ansprüche, wobei die aus dem anderen Aufzeichnungsmedium (120) gelesenen Daten auf einer vorbestimmten Anzahl der optischen Zielplatten als Reaktion auf eine Aufforderung zur Eingabe der vorbestimmten Anzahl der optischen Zielplatten, auf die die Daten kopiert werden sollen, und auf die Eingabe der vorbestimmten Anzahl aufgezeichnet werden.

6. Verfahren zur optischen Aufzeichnung und/oder Wiedergabe nach einem der vorhergehenden Ansprüche, wobei die Aufforderungen, die originale optische Platte und die eine oder die mehreren optischen Zielplatten bereitzustellen, durch Anzeigen entsprechender Nachrichten erfolgen.

7. Verfahren zur optischen Aufzeichnung und/oder Wiedergabe nach einem der vorhergehenden Ansprüche, wobei das andere Aufzeichnungsmedium (120) ein Festplattenlaufwerk ist.

8. Verfahren zur optischen Aufzeichnung und/oder Wiedergabe nach einem der vorhergehenden Ansprüche, wobei die Aufforderung zur Eingabe der vorbestimmten Anzahl der optischen Zielplatten, auf die die Daten kopiert werden sollen, durch Anzeigen einer entsprechenden Nachricht erfolgt.

9. Verfahren zur optischen Aufzeichnung und/oder Wiedergabe nach einem der vorhergehenden Ansprüche, wobei die originale optische Platte und/oder die eine oder die mehreren optischen Zielplatten Digital Versatile Discs oder Compact Discs sind.

10. Vorrichtung zur optischen Aufzeichnung und/oder Wiedergabe, umfassend:
eine Tasteneingabeeinheit (103);
ein optisches Plattenlaufwerk (110), das betreibbar ist, um Daten aus einer originalen optischen Platte zu lesen und die Daten auf einer oder mehreren optischen Zielplatten aufzuzeichnen;
ein Aufzeichnungsmedium (120), auf dem die aus der originalen optischen Platte gelesenen Daten aufgezeichnet werden können; **gekennzeichnet durch**
eine Steuerung (130), die betreibbar ist, um das optische Plattenlaufwerk zu steuern, um die Daten aus dem Aufzeichnungsmedium als Reaktion auf die Auswahl eines Kopiermodus optischer Platten auf einer der einen oder mehreren optischen Zielplatten automatisch aufzuzeichnen; und wobei
ein Benutzer eine vorbestimmte Anzahl der einen oder mehreren optischen Zielplatten, auf die die Daten aufgezeichnet werden sollen, über die Tasteneingabeeinheit (103) eingeben kann, bevor der Schritt des Lesens von Daten aus der originalen optischen Platte durchgeführt wird.

11. Vorrichtung zur optischen Aufzeichnung und/oder Wiedergabe nach Anspruch 10, wobei die Tasteneingabeeinheit (103) betreibbar ist, um den Kopiermodus optischer Platten einzugeben.

12. Vorrichtung zur optischen Aufzeichnung und/oder Wiedergabe nach Anspruch 10 oder 11, wobei
die Tasteneingabeeinheit (103) betreibbar ist, um einen Befehl einzugeben, einen Kopiermodus optischer Platten einzustellen, bei dem auf einer originalen optischen Platte aufgezeichnete Daten automatisch auf einer oder mehreren optischen Zielplatten aufgezeichnet werden;
ein optisches Plattenlaufwerk (110) betreibbar ist, um die Daten aus der originalen optischen Platte zu lesen und die Daten auf der einen oder den mehreren optischen Zielplatten aufzuzeichnen;
ein Aufzeichnungsmedium (120), auf dem die aus der originalen optischen Platte gelesenen Daten aufgezeichnet werden können; und
eine Steuerung (130), die betreibbar ist, um das optische Plattenlaufwerk (110) und das Aufzeichnungsmedium (120) zu steuern, um zu bestimmen, daß die originale optische Platte bereitgestellt ist, um die Daten aus der originalen optischen Platte zu lesen, um die gelesenen Daten auf dem Aufzeichnungsmedium (120) aufzuzeichnen, um zu bestimmen, daß eine der optischen Zielplatten bereitgestellt ist, um die Daten aus dem Aufzeichnungsmedium (120) zu lesen, um die gelesenen Daten auf der einen der optischen Zielplatten aufzuzeichnen.

13. Vorrichtung zur optischen Aufzeichnung und/oder Wiedergabe nach einem der Ansprüche 10-12, wobei die Steuerung (130) die Daten als Reaktion auf die Aufzeichnung der aus dem Aufzeichnungsmedium gelesenen Daten auf der optischen Zielplatte von dem Aufzeichnungsmedium (120) löscht.

14. Vorrichtung zur optischen Aufzeichnung und/oder Wiedergabe nach einem der Ansprüche 10-13, wobei die Steuerung (130) betreibbar ist, um als Reaktion auf die Aufzeichnung der aus dem Aufzeichnungsmedium (120) gelesenen Daten auf der einen der optischen Zielplatten zu bestimmen, ob die Daten auf einer vorbestimmten Anzahl der optischen Zielplatten aufgezeichnet werden, und um als Reaktion auf die Nichtaufzeichnung der Daten auf der vorbestimmten Anzahl der optischen Zielplatten das Aufzeichnen der Daten auf einem Rest der optischen Zielplatten fortzusetzen, wobei die vorbestimmte Anzahl über die Tasteneingabeeinheit (103) eingegeben wird.

15. Vorrichtung zur optischen Aufzeichnung und/oder Wiedergabe nach einem der Ansprüche 10-14, ferner mit einer Anzeigeeinheit (106), die betreibbar ist, um einen Benutzer aufzufordern, die originale optische Platte und/oder eine der optischen Zielplatten bereitzustellen.

16. Vorrichtung zur optischen Aufzeichnung und/oder Wiedergabe nach einem der Ansprüche 10-15, wobei die Steuerung betreibbar ist, um als Reaktion auf die Einstellung des Kopiermodus optischer Platten die Anzeigeeinheit (106) zu steuern, um eine Aufforderung anzuzeigen, die originale optische Platte bereitzustellen, und um als Reaktion auf die Aufzeichnung der gelesenen Daten auf dem Aufzeichnungsmedium (120) eine Aufforderung anzuzeigen, die eine der optischen Zielplatten bereitzustellen.

17. Vorrichtung zur optischen Aufzeichnung und/oder Wiedergabe nach einem der Ansprüche 10-16, wobei das Aufzeichnungsmedium (120) ein Festplattenlaufwerk ist.

18. Vorrichtung zur optischen Aufzeichnung und/oder Wiedergabe nach einem der Ansprüche 10-17,
wobei die Steuerung (130) betreibbar ist, um die Anzeigeeinheit (106) zu steuern, um eine Aufforderung anzuzeigen, die vorbestimmte Anzahl der optischen Zielplatten bereitzustellen, auf die die Daten kopiert werden sollen.

19. Vorrichtung zur optischen Aufzeichnung und/oder Wiedergabe nach einem der Ansprüche 10-18, wobei die originale optische Platte und/oder die eine oder die mehreren optischen Zielplatten Digital Versatile Discs oder Compact Discs sind.

## Revendications

1. Procédé d'enregistrement et/ou de reproduction optique, comprenant les étapes consistant à :
lire des données sur un disque optique d'origine ;
enregistrer les données sur un autre support d'enregistrement (120) ; et
lire les données sur l'autre support d'enregistrement (120) pour les enregistrer sur un disque optique de destination ;
le procédé d'enregistrement et/ou de reproduction optique étant **caractérisé par** les étapes consistant à :
demander à un utilisateur de fournir un ou une pluralité de disques optiques de destination sur lequel ou lesquels les données sont destinées à être enregistrées avant de mettre en oeuvre l'étape consistant à lire des données sur le disque optique d'origine ;
l'étape consistant à lire des données sur le disque optique d'origine jusqu'à l'étape consistant à enregistrer les données sur le ou la pluralité de disques optiques de destination sont mises en oeuvre automatiquement lorsqu'un mode de copie de disque optique a été choisi.

2. Procédé d'enregistrement et/ou de reproduction optique selon la revendication 1, comprenant en outre les étapes consistant à :
définir un mode de copie de disque optique par lequel des données enregistrées sur un disque optique d'origine sont automatiquement enregistrées sur un ou une pluralité de disques optiques de destination ;
lorsqu'il a été demandé de fournir le disque optique d'origine et qu'il a été déterminé que le disque optique d'origine a été fourni, lire automatiquement les données sur le disque optique d'origine, et enregistrer les données lues sur un autre support d'enregistrement (120) ;
lire les données sur l'autre support d'enregistrement (120), et enregistrer les données lues sur le ou la pluralité de disques optiques de destination lorsqu'il a été déterminé qu'un des disques optiques de destination a été fourni.

3. Procédé d'enregistrement et/ou de reproduction optique selon la revendication 1 ou la revendication 2, comprenant en outre l'étape consistant à effacer les données de l'autre support d'enregistrement (120) lorsque les données lues sur le support d'enregistrement (120) ont été enregistrées sur le ou la pluralité de disques optiques de destination.

4. Procédé d'enregistrement et/ou de reproduction optique selon l'une quelconque des revendications précédentes, comprenant en outre l'étape consistant à demander à un utilisateur de fournir un parmi le ou la pluralité de disques optiques de destination lorsque les données ont été enregistrées sur l'autre support d'enregistrement.

5. Procédé d'enregistrement et/ou de reproduction optique selon l'une quelconque des revendications précédentes, les données lues sur l'autre support d'enregistrement (120) étant enregistrées sur un nombre prédéterminé des disques optiques de destination lorsqu'il a été demandé de saisir le nombre prédéterminé des disques optiques de destination sur lesquels les données sont destinées à être copiées, et lorsque le nombre prédéterminé a été saisi.

6. Procédé d'enregistrement et/ou de reproduction optique selon l'une quelconque des revendications précédentes, les demandes de fournir le disque optique d'origine et le ou la pluralité de disques optiques de destination étant faites par affichage de messages correspondants.

7. Procédé d'enregistrement et/ou de reproduction optique selon l'une quelconque des revendications précédentes, l'autre support d'enregistrement (120) étant un lecteur de disque dur.

8. Procédé d'enregistrement et/ou de reproduction optique selon l'une quelconque des revendications précédentes, la demande de saisir le nombre prédéterminé des disques optiques de destination sur lesquels les données sont destinées à être copiées étant faite par affichage d'un message correspondant.

9. Procédé d'enregistrement et/ou de reproduction optique selon l'une quelconque des revendications précédentes, le disque optique d'origine et/ou le ou la pluralité de disques optiques de destination étant des disques polyvalents numériques ou des disques compacts.

10. Appareil d'enregistrement et/ou de reproduction optique, comprenant :
un module de saisie (103) à touches ;
un lecteur (110) de disque optique fonctionnant pour lire des données sur un disque optique d'origine et les enregistrer sur un ou une pluralité de disques optiques de destination ;
un support d'enregistrement (120) sur lequel les données lues sur le disque optique d'origine peuvent être enregistrées ;
l'appareil d'enregistrement et/ou de reproduction optique étant **caractérisé par** :
un module de commande (130) fonctionnant pour commander le lecteur de disque optique de façon à enregistrer automatiquement les données du support d'enregistrement sur un parmi le ou la pluralité de disques optique de destination lorsqu'un mode de copie de disque optique a été choisi ; et
un utilisateur pouvant saisir, au moyen du module de saisie (103) à touches, un nombre prédéterminé du ou de la pluralité de disques optiques de destination sur lesquels les données sont destinées à être enregistrées avant l'étape consistant à lire des données sur le disque optique d'origine.

11. Appareil d'enregistrement et/ou de reproduction optique selon la revendication 10, le module de saisie (103) à touches fonctionnant pour saisir le mode de copie de disque optique.

12. Appareil d'enregistrement et/ou de reproduction optique selon la revendication 10 ou la revendication 11 :
le module de saisie (103) à touches fonctionnant pour saisir une instruction visant à définir un mode de copie de disque optique par lequel des données enregistrées sur un disque optique d'origine sont automatiquement enregistrées sur un ou une pluralité de disques optiques de destination ;
un lecteur (110) de disque optique fonctionnant pour lire les données sur le disque optique d'origine et pour enregistrer les données lues sur le ou la pluralité de disques optiques de destination ;
un support d'enregistrement (120) sur lequel les données lues sur le disque optique d'origine peuvent être enregistrées ; et
un module de commande (130) fonctionnant pour commander le lecteur (110) de disque optique et le support d'enregistrement (120) de façon à déterminer que le disque optique d'origine a été fourni, à lire les données sur le disque optique d'origine pour enregistrer les données lues sur le support d'enregistrement (120), à déterminer qu'un des disques optiques de destination a été fourni, et à lire les données sur le support d'enregistrement (120) pour enregistrer les données lues sur ledit un des disques optiques de destination.

13. Appareil d'enregistrement et/ou de reproduction optique selon l'une quelconque des revendications 10 à 12, le module de commande (130) effaçant les données du support d'enregistrement (120) lorsque les données lues sur le support d'enregistrement ont été enregistrées sur le disque optique de destination.

14. Appareil d'enregistrement et/ou de reproduction optique selon l'une quelconque des revendications 10 à 13, le module de commande (130) fonctionnant pour déterminer si les données ont été enregistrées sur un nombre prédéterminé des disques optiques de destination lorsque les données lues sur le support d'enregistrement (120) ont été enregistrées sur ledit un des disques optiques de destination, et pour continuer d'enregistrer les données sur le reste des disques optiques de destination lorsque les données n'ont pas été enregistrées sur le nombre prédéterminé des disques optiques de destination, le nombre prédéterminé étant saisi au moyen du module de saisie (103) à touches.

15. Appareil d'enregistrement et/ou de reproduction optique selon l'une quelconque des revendications 10 à 14, comprenant en outre un module d'affichage (106) fonctionnant pour demander à un utilisateur de fournir le disque optique d'origine et/ou un des disques optiques de destination.

16. Appareil d'enregistrement et/ou de reproduction optique selon l'une quelconque des revendications 10 à 15, le module de commande fonctionnant pour commander le module d'affichage (106) de façon à afficher une demande de fournir le disque optique d'origine lorsque le mode de copie de disque optique a été défini, et à afficher une demande de fournir ledit un des disques optiques de destination lorsque les données lues ont été enregistrées sur le support d'enregistrement (120).

17. Appareil d'enregistrement et/ou de reproduction optique selon l'une quelconque des revendications 10 à 16, le support d'enregistrement (120) étant un lecteur de disque dur.

18. Appareil d'enregistrement et/ou de reproduction optique selon l'une quelconque des revendications 10 à 17, le module de commande (130) fonctionnant pour commander le module d'affichage (106) de façon à afficher une demande de fournir le nombre prédéterminé des disques optiques de destination sur lesquels les données sont destinées à être copiées.

19. Appareil d'enregistrement et/ou de reproduction optique selon l'une quelconque des revendications 10 à 18, le disque optique d'origine et/ou le ou la pluralité de disques optiques de destination étant des disques polyvalents numériques ou des disques compacts.
